(19) Europäisches Patentamt / European Patent Office / Office européen des brevets

(11) **EP 1 926 399 B2**

(12) **NEW EUROPEAN PATENT SPECIFICATION**
After opposition procedure

(45) Date of publication and mention
of the opposition decision:
**12.03.2014 Bulletin 2014/11**

(45) Mention of the grant of the patent:
**18.02.2009 Bulletin 2009/08**

(21) Application number: **06805732.2**

(22) Date of filing: **13.09.2006**

(51) Int Cl.:
*A23L 2/66* *(2006.01)*        *A23L 2/54* *(2006.01)*
*A23L 1/305* *(2006.01)*      *A23L 1/054* *(2006.01)*
*A23C 9/152* *(2006.01)*     *A23C 9/154* *(2006.01)*
*A23C 11/06* *(2006.01)*     *A23G 1/44* *(2006.01)*
*A23G 3/44* *(2006.01)*       *A23G 9/38* *(2006.01)*
*A23G 3/52* *(2006.01)*       *A23G 3/42* *(2006.01)*
*A23G 1/52* *(2006.01)*       *A23G 1/42* *(2006.01)*
*A23G 9/34* *(2006.01)*

(86) International application number:
**PCT/EP2006/008993**

(87) International publication number:
**WO 2007/039066 (12.04.2007 Gazette 2007/15)**

(54) **PROCESS FOR PRODUCING A FROZEN AERATED COMPOSITION**

HERSTELLUNGSVERFAHREN FÜR EINE GEFRORENE UND DURCHLÜFTETE ZUSAMMENSETZUNG

PROCÉDÉ DE PRODUCTION D UNE COMPOSITION AÉRÉE CONGELÉE

(84) Designated Contracting States:
**AT BE BG CH CY CZ DE DK EE ES FI FR GB GR HU IE IS IT LI LT LU LV MC NL PL PT RO SE SI SK TR**

(30) Priority: **23.09.2005 EP 05255944**
**10.11.2005 EP 05256960**

(43) Date of publication of application:
**04.06.2008 Bulletin 2008/23**

(73) Proprietors:
• **Unilever PLC**
**London**
**EC4Y 0DY (GB)**
Designated Contracting States:
**CY GB IE**
• **Unilever N.V.**
**3013 AL Rotterdam (NL)**
Designated Contracting States:
**AT BE BG CH CZ DE DK EE ES FI FR GR HU IS IT LI LT LU LV MC NL PL PT RO SE SI SK TR**

(72) Inventors:
• **COX, Andrew, Richard**
**Sharnbrook Bedfordshire MK44 1LQ (GB)**
• **HOMAN, Jennifer, Elizabeth**
**Sharnbrook Bedfordshire MK44 1LQ (GB)**
• **RUSSELL, Andrew, Baxter**
**Sharnbrook Bedfordshire MK44 1LQ (GB)**

(74) Representative: **van Benthum, Wilhelmus A. J. et al**
**Unilever Patent Group**
**Olivier van Noortlaan 120**
**3133 AT Vlaardingen (NL)**

(56) References cited:
**EP-A- 0 777 969        EP-A- 1 327 390**
**EP-A- 1 520 484        EP-A- 1 623 631**
**WO-A-96/41882          WO-A2-2005/058055**
**DE-U1- 29 715 519      US-A- 4 627 983**
**US-B1- 6 187 365**

• **SCHOLMEIJER K ET AL: "FUNGAL HYDROPHOBINS IN MEDICAL AND TECHNICAL APPLICATIONS" APPLIED MICROBIOLOGY AND BIOTECHNOLOGY, SPRINGER VERLAG, BERLIN, DE, vol. 56, no. 1/2, July 2001 (2001-07), pages 1-8, XP001120015 ISSN: 0175-7598 cited in the application**
• **WOESTEN H A B ET AL: "Hydrophobins, the fungal coat unravelled" BIOCHIMICA ET BIOPHYSICA ACTA. MR. REVIEWS ON BIOMEMBRANES, ELSEVIER, AMSTERDAM, NL, vol. 1469, no. 2, 18 September 2000 (2000-09-18), pages 79-86, XP004281756 ISSN: 0304-4157**
• **LINDER ET AL: "Hydrophobins: the protein-amphiphiles of filamentous fungi" FEMS MICROBIOLOGY REVIEWS, ELSEVIER, AMSTERDAM, NL, vol. 29, no. 5, November 2005 (2005-11), pages 877-896, XP005107912 ISSN: 0168-6445**

EP 1 926 399 B2

- DATABASE WPI Section Ch, Week 200444 Derwent Publications Ltd., London, GB; Class B04, AN 2004-465457 XP002313777 & KR 2004 018 844 A (KIM J G) 4 March 2004 (2004-03-04)
- T. SIENKIEWICZ ET AL.: 'Whey and whey utilization', 1990, VERLAG TH. MANN, GELSENKIRCHEN-BUER pages 82 - 83
- 'Semifreddo a la pera' LA CUCINA ITALIANA 2002, page 1233
- R. BEROLZHHEIMER: 'Culinary Arts Institute Encyclopedic Cookbokk', 1988
- DILIP ET AL.: 'Handbook of fungal biotechnology', 2004 pages 413 - 427
- DAMODARAN, CURRENT OPINION IN COLLOID & INTERFACE SCIENCE 2004, pages 329 - 339

**Description**

Field of the invention

The present invention relates to processes for producing frozen aerated compositions, in particular to processes comprising the steps of aerating an aqueous mixture to form a foam, followed by quiescently freezing the foam.

Background to the invention

Frozen aerated compositions, for example ice cream, sorbet and frozen yoghurt, are conventionally produced by a process where aeration and freezing occur simultaneously. In order to achieve aeration, shear or agitation must be applied to the composition during freezing. This requires complex and expensive processing equipment such as a scraped surface heat exchanger, and restricts its use; for example such equipment is not generally available to consumers in their kitchens.

An alternative approach is to separate the aeration and freezing steps, i.e. forming an aerated mixture (i.e. a foam) and then freezing this foam in a subsequent process step. The freezing step can therefore be quiescent, i.e. without shear or agitation, since aeration has already been achieved. US 6 187 365 describes a process for the production of a molded aerated frozen bar by preparing a mix of ingredients suitable for a frozen aerated bar, whipping the mix to obtain an aerated mix having an overrun between about 20% and about 250%, molding the aerated mix to give a molded aerated mix and freezing the molded aerated mix to produce the molded frozen aerated bar

There are two problems with this approach. Firstly, unfrozen foams are unstable over long periods of time. Disproportionation and coalescence lead to bubble growth, and creaming (due to the buoyancy of the air bubbles) leads to vertical phase separation resulting in a large proportion of bubbles close to the upper surface and the depletion of bubbles at the bottom. This normally means that the freezing step must follow the aeration step almost immediately to minimise the effect of this instability on the final product. Secondly significant loss of gas can occur during quiescent freezing as the growing ice crystals physically push the gas bubbles out of the mixture. This effect is more pronounced for large gas bubbles because the ice crystals are less able to grow around the bubbles. Thus there remains a need for a simple, inexpensive method of producing frozen aerated frozen compositions.

Summary of the invention

In our co-pending application WO 06 / 010425, we have found that a fungal protein termed hydrophobin allows the production of foam with excellent stability to disproportionation and coalescence. Hydrophobin is surface active and acts as an aerating agent, while also appearing to confer a highly viscoelastic nature to the surface of the air bubbles.

We have now found that it is possible to retain gas during a process comprising an aeration step followed by a quiescent freezing step when hydrophobin is used. The hydrophobin stabilises the gas bubbles both during storage between the aeration and freezing steps, and also during freezing. Accordingly, the present invention provides a process for producing a frozen aerated composition, and stabilising the aerated composition during freezing the process comprising aerating an aqueous mixture, followed by quiescently freezing the aerated mixture, characterized in that the mixture comprises hydrophobin, wherein the hydrophobin is capable of self-assembly at a hydrophobic-hydrophilic interface to form a protein film and the hydrophobin comprises the sequence :

$$X_n\text{-}C\text{-}X_{5\text{-}9}\text{-}C\text{-}C\text{-}X_{11\text{-}39}\text{-}C\text{-}X_{8\text{-}23}\text{-}C\text{-}X_{5\text{-}9}\text{-}C\text{-}C\text{-}X_{6\text{-}18}\text{-}C\text{-}X_m \qquad \text{(SEQ. ID NO. 1)}$$

wherein X represents any amino acid and n and m independently represent an integer.

Preferably, the hydrophobin is present in an amount of at least 0.001 wt%, more preferably at least 0.01 wt%.

Preferably, the hydrophobin is in a substantially isolated form.

Preferably the hydrophobin is a class II hydrophobin.

Preferably the frozen aerated composition has an overrun of at least 25%.

Preferably the frozen aerated composition is a food product. More preferably the food product is a frozen confectionery product. Most preferably the frozen confectionery product is an ice cream.

Preferably the aerating step is selected from the group consisting of continuous whipping, batch whipping, gas injection, gas entrainment, gas generation via a chemical or biochemical reaction and release of trapped gas from a solution or solid.

Preferably the freezing step is selected from the group consisting of placing a container containing the aqueous mixture into a cold environment; immersing a mould containing the mixture in a bath of cold refrigerant; placing portions of the mixture directly into a bath of cryogenic fluid; film freezing; and spraying droplets of the mixture into a cold environment.

Preferably, the mixture further comprises a yield stress agent. Preferably the yield stress agent is a polysaccharide, more preferably a bacterial polysaccharide, such as xanthan and/or gellan.

In a related aspect, the present invention provides a process for producing a frozen aerated composition and stabilising the aerated composition during freezing, the process comprising providing an aqueous mixture comprising hydrophobin, aerating the mixture, followed by quiescently freezing the aerated mixture, wherein the hydrophobin is capable of self-assembly at a hydrophobic-hydrophilic interface to form a protein film and the hydrophobin comprises the sequence :

$$X_n\text{-}C\text{-}X_{5\text{-}9}\text{-}C\text{-}C\text{-}X_{11\text{-}39}\text{-}C\text{-}X_{8\text{-}23}\text{-}C\text{-}X_{5\text{-}9}\text{-}C\text{-}C\text{-}X_{6\text{-}18}\text{-}C\text{-}X_m \qquad \text{(SEQ. ID NO. 1)}$$

wherein X represents any amino acid and n and m independently represent an integer.

In a related aspect, the present invention provides the use of a hydrophobin for stabilising an aerated composition during quiescent freezing, wherein the hydrophobin is capable of self-assembly at a hydrophobic-hydrophilic interface to form a protein film and the hydrophobin comprises the sequence :

$$X_n\text{-}C\text{-}X_{5\text{-}9}\text{-}C\text{-}C\text{-}X_{11\text{-}39}\text{-}C\text{-}X_{8\text{-}23}\text{-}C\text{-}X_{5\text{-}9}\text{-}C\text{-}C\text{-}X_{6\text{-}18}\text{-}C\text{-}X_m \qquad \text{(SEQ. ID NO. 1)}$$

wherein X represents any amino acid and n and m independently represent an integer.

Detailed description of the invention

Unless defined otherwise, all technical and scientific terms used herein have the same meaning as commonly understood by one of ordinary skill in the art (e.g. in chilled confectionery/frozen confectionery manufacture, chemistry and biotechnology). Definitions and descriptions of various terms and techniques used in chilled/frozen confectionery manufacture are found in Ice Cream, 4th Edition, Arbuckle (1986), Van Nostrand Reinhold Company, New York, NY. Standard techniques used for molecular and biochemical methods can be found in Sambrook et al., Molecular Cloning: A Laboratory Manual, 3rd ed. (2001) Cold Spring Harbor Laboratory Press, Cold Spring Harbor, N.Y. and Ausubel et al., Short Protocols in Molecular Biology (1999) 4th Ed, John Wiley & Sons, Inc. - and the full version entitled Current Protocols in Molecular Biology). Useful reference sources describing polysaccharides and their solution behaviour are: "Food polysaccharides and their applications", ed. A.M. Stephen, Marcel Dekker Inc., 2005; "Food Gels", ed. P. Harris, Elsevier, 1990.

*Hydrophobins*

Hydrophobins are a well-defined class of proteins (Wessels, 1997, Adv. Microb. Physio. 38: 1-45; Wosten, 2001, Annu Rev. Microbiol. 55: 625-646) capable of self-assembly at a hydrophobic/hydrophilic interface, and having a conserved sequence:

$$X_n\text{-}C\text{-}X_{5\text{-}9}\text{-}C\text{-}C\text{-}X_{11\text{-}39}\text{-}C\text{-}X_{8\text{-}23}\text{-}C\text{-}X_{5\text{-}9}\text{-}C\text{-}C\text{-}X_{6\text{-}18}\text{-}C\text{-}X_m \qquad \text{(SEQ. ID NO. 1)}$$

where X represents any amino acid, and n and m independently represent an integer. Typically, a hydrophobin has a length of up to 125 amino acids. The cysteine residues (C) in the conserved sequence are part of disulphide bridges. In accordance with the definition of the present invention, self-assembly can be detected by adsorbing the protein to Teflon and using Circular Dichroism to establish the presence of a secondary structure (in general, a-helix) (De Vocht et al., 1998, Biophys. J. 74: 2059-68).

The formation of a film can be established by incubating a Teflon sheet in the protein solution followed by at least three washes with water or buffer (Wosten et al., 1994, Embo. J. 13: 5848-54). The protein film can be visualised by any suitable method, such as labeling with a fluorescent marker or by the use of fluorescent antibodies, as is well established in the art. m and n typically have values ranging from 0 to 2000, but more usually m and n in total are less than 100 or 200. The definition of hydrophobin in the context of the present invention includes fusion proteins of a hydrophobin and another polypeptide as well as conjugates of hydrophobin and other molecules such as polysaccharides.

Hydrophobins identified to date are generally classed as either class I or class II. Both types have been identified in fungi as secreted proteins that self-assemble at hydrophobilic interfaces into amphipathic films. Assemblages of class I hydrophobins are relatively insoluble whereas those of class II hydrophobins readily dissolve in a variety of solvents.

Hydrophobin-like proteins have also been identified in filamentous bacteria, such as *Actinomycete* and *Steptomyces* sp. (WO01/74864). These bacterial proteins, by contrast to fungal hydrophobins, form only up to one disulphide bridge since they have only two cysteine residues.

The hydrophobins can be obtained by extraction from native sources, such as filamentous fungi, by any suitable process. For example, hydrophobins can be obtained by culturing filamentous fungi that secrete the hydrophobin into the growth medium or by extraction from fungal mycelia with 60% ethanol. It is particularly preferred to isolate hydrophobins from host organisms that naturally secrete hydrophobins. Preferred hosts are hyphomycetes (e.g. Trichoderma), basidiomycetes and ascomycetes. Particularly preferred hosts are food grade organisms, such as *Cryphonectria parasitica* which secretes a hydrophobin termed cryparin (MacCabe and Van Alfen, 1999, App. Environ. Microbiol 65: 5431-5435).

Alternatively, hydrophobins can be obtained by the use of recombinant technology. For example host cells, typically micro-organisms, may be modified to express hydrophobins and the hydrophobins can then be isolated and used in accordance with the present invention. Techniques for introducing nucleic acid constructs encoding hydrophobins into host cells are well known in the art. More than 34 genes coding for hydrophobins have been cloned, from over 16 fungal species (see for example WO96/4188 which gives the sequence of hydrophobins identified in *Agaricus bisporus*; and Wosten, 2001, Annu Rev. Microbiol. 55: 625-646). Recombinant technology can also be used to modify hydrophobin sequences or synthesise novel hydrophobins having desired/improved properties.

Typically, an appropriate host cell or organism is transformed by a nucleic acid construct that encodes the desired hydrophobin. The nucleotide sequence coding for the polypeptide can be inserted into a suitable expression vector encoding the necessary elements for transcription and translation and in such a manner that they will be expressed under appropriate conditions (e.g. in proper orientation and correct reading frame and with appropriate targeting and expression sequences). The methods required to construct these expression vectors are well known to those skilled in the art.

A number of expression systems may be used to express the polypeptide coding sequence. These include, but are not limited to, bacteria, fungi (including yeast), insect cell systems, plant cell culture systems and plants all transformed with the appropriate expression vectors. Preferred hosts are those that are considered food grade - 'generally regarded as safe' (GRAS).

Suitable fungal species, include yeasts such as (but not limited to) those of the genera *Saccharomyces, Kluyveromyces, Pichia, Hansenula, Candida, Schizo saccharomyces* and the like, and filamentous species such as (but not limited to) those of the genera *Aspergillus, Trichoderma, Mucor, Neurospora, Fusarium* and the like.

Hydrophobins can be purified from culture media or cellular extracts by, for example, the procedure described in WO01/57076 which involves adsorbing the hydrophobin present in a hydrophobin-containing solution to surface and then contacting the surface with a surfactant, such as Tween 20, to elute the hydrophobin from the surface. See also Collen et al., 2002, Biochim Biophys Acta. 1569: 139-50; Calonje et al., 2002, Can. J. Microbiol. 48: 1030-4; Askolin et al., 2001, Appl Microbiol Biotechnol. 57: 124-30; and De Vries et al., 1999, Eur J Biochem. 262: 377-85.

*Aeration*

The term "aerated" means that gas has been intentionally incorporated into the mixture to form a foam, for example by mechanical means. The gas can be any gas, but is preferably, particularly in the context of food products, a food-grade gas such as air, nitrogen or carbon dioxide. The extent of aeration is typically defined in terms of "overrun". In the context of the present invention, %overrun is defined in terms of the volume of the aerated product and the volume of the unaerated mixture from which it was formed:

$$\text{Overrun} = \frac{\text{Volume of final aerated product - volume of unaerated mixture}}{\text{Volume of unaerated mixture}} \times 100$$

The amount of overrun present in the product will vary depending on the desired product characteristics. Preferably the level of overrun is at least 10%, more preferably at least 25 or 50%. Preferably the level of overrun is less than 400%, more preferably less than 300 or 200%.

Preferably, the foam is substantially homogeneous.

The aeration step can be performed by any suitable method. Methods of aeration include (but are not limited to):

- continuous whipping in a rotor-stator device such as an Oakes mixer (E.T. Oakes Corp), a Megatron mixer (Kinematica AG) or a Mondomix mixer (Haas-Mondomix BV);
- batch whipping in a device involving surface entrainment of gas, such as a Hobart whisk mixer or an agitated tank;
- gas injection, for example through a sparger, jet mixer or microfluidic device;
- gas injection followed by mixing and dispersion in a continuous flow device such as a scraped surface heat exchanger, a static mixer or a pump;
- elevated pressure gas injection, where a gas is solubilised under pressure and then forms a dispersed gas phase on reduction of the pressure. This could occur upon dispensing from an aerosol container;

- gas entrainment, for example via a venturi valve;
- gas generation by means of a chemical or biochemical reaction, for example the reaction between an acid and a carbonate;
- release of trapped gas from a solution or solid, for example a glassy material (as described in EP1206193) or a clathrate hydrate.

*Period between aeration and freezing steps*

The present invention allows the separation of the aeration and freezing steps. Thus frozen aerated compositions can be produced in several different ways. For example, the aeration and freezing steps can both take place within a factory so that the frozen aerated composition is produced in the factory and the consumer buys the frozen aerated composition in its final form. Alternatively only the aeration step is performed in a factory, so that consumers buy an unfrozen pre-aerated mixture, which they then freeze at home. A third possibility is that the consumer buys an unaerated, unfrozen mixture which is both aerated and frozen at home.

Particularly in the second of these cases (but also potentially in the others as well) there is a significant period of time between the aeration and freezing steps. In such cases where the aerated compositions are stored before freezing, or even where the freezing process takes a long time, it is necessary that the foams are stable both to disproportionation and coalescence, and also to creaming during this time. Hydrophobins give the foam good stability with respect to disproportionation and coalescence. Creaming (which is due to the buoyancy of the air bubbles) can lead to vertical phase separation resulting in a large proportion of bubbles close to the upper surface and the depletion of bubbles at the bottom. Creaming can also lead to subsequent air loss due to the closer packing of the bubbles in the foam and the foam collapse that may result therefrom. Creaming is inhibited when the continuous phase of the foam has an apparent yield stress.

Accordingly, in one embodiment, the mixture further comprises a yield stress agent or agents which impart suitable rheological properties to the continuous phase, thus inhibiting creaming of the air bubbles so that the foam remains homogeneous over an extended period of time. We here define yield stress agents as an ingredient or ingredients (molecular or particulate) that provide an apparent yield stress to the continuous phase.

Suitable ingredients that can be used as the yield stress agents, particularly in food systems, include gelling agents, some non-limiting examples of which are summarised below:

- Thermoreversible gelling biopolymers such as iota- and kappa- carrageenan, and agar.
- Chemically set gelling biopolymers which derive their gel structure from an interaction between the polysaccharide and an appropriate ion such as $Ca^{2+}$. Examples include sodium alginate and pectin.
- Bacterial polysaccharides such as xanthan or gellan that can form weak gel-like behaviour which is disrupted by shear. Preferably such polysaccharides are added to give a final amount of at least 0.2 wt% in the aerated mix. If the aerated mix is stored for a long time before freezing, such as a day or more, higher amounts, preferably at least 0.4 wt%, are added.
- Fungal polysaccharides such as schizophyllan.
- Synergistic gels that comprise of two or more biopolymers that may be individually non-gelling, but on mixing will form a gel or a gel of a higher modulus. Examples include: sodium alginate with pectin, xanthan with locust bean gum, agar with locust bean gum, and kappa carrageenan with locust bean gum.

A number of the yield stress agents described above are used conventionally to gel products such that they are set. Gelling polysaccharides are not the only ingredients that can be used as yield stress agents in the context of this invention. Any ingredient (molecular or particle) that results in an apparent yield stress of the continuous phase can be used. Other examples of yield stress agents include:

- Lipogels. These include, but are not limited to, polyglycerol esters of saturated fatty acids, and blends of monoglycerides of fatty acids with citric acid esters of saturated fatty acids, lactic acid esters of saturated fatty acids, or diacetyl tartaric acid esters of saturated fatty acids. Typically, the amount of lipogel ingredient would be less than about 2-5 wt% in the pre-aerated mix. Examples of how to produce lipogels can be found in Heertje et al., Food Science and Technology, 1998, 31, 387-396.
- Gelling proteins (thermally or chemically), e.g. whey protein, gelatine.
- Oil in water emulsions where the dispersed oil particles interact with one another such as to provide the continuous phase with a gelled nature.
- Fibres e.g. of fruit or vegetable origin, modified cellulose etc.

Preferably an aerated composition retains at least 50% of its original overrun, more preferably 75%, for a period of at least a week, more preferably at least a month (typically measured after storage at chill temperatures (*ca.* 5°C)).

*Quiescent freezing step*

Quiescent (or static) freezing refers to any process where an aqueous liquid (e.g. a solution or suspension) is cooled below its freezing point, such that partial or total solidification occurs through ice crystal formation, in the absence of an imposed shear field. Thus the liquid is frozen without it being deliberately agitated, mixed or shaken during freezing. The quiescent freezing step can be achieved by a number of methods which include (but are not limited to):

- Placing a container containing the liquid to be frozen into a cold environment where the temperature is below the liquid freezing point (such as a domestic freezer, a commercial cold store or blast freezer or a retail freezer cabinet) until the desired degree of solidification has taken place.
- Filling a mould with the liquid to be frozen and immersing the mould in a bath of cold liquid medium (such as brine, glycol or liquid nitrogen) until the desired degree of solidification has taken place.
- Placing or dropping a portion of the liquid to be frozen directly into a bath of cryogenic fluid (such as liquid nitrogen) for a sufficient time for it to solidify before removing it.
- Film freezing, i.e. spreading the liquid as a layer on a cold surface, allowing the layer to freeze in the absence of shear and then scraping the frozen layer from the cold surface. Examples of film freezers include drum freezers and rotating cold plates.
- Spraying droplets of the liquid into a cold environment within an enclosed chamber, such that the required degree of solidification has occurred by the time the droplets fall to the base of the chamber under gravity. In this case, although the droplets are moving, there is no imposed shear field on the liquid in the droplet.

*Compositions*

The amount of hydrophobin present in the composition will generally vary depending on the formulation and volume of the air phase. Typically, the composition will contain at least 0.001 wt%, hydrophobin, more preferably at least 0.005 or 0.01 wt%. Typically the composition will contain less than 1 wt% hydrophobin. The hydrophobin can be from a single source or a plurality of sources e.g. the hydrophobin can a mixture of two or more different hydrophobin polypeptides.

The hydrophobin is added in a form and in an amount such that it is available to stabilise the air phase. By the term "added", we mean that the hydrophobin is deliberately introduced into the composition for the purpose of taking advantage of its foam stabilising properties. Consequently, where ingredients are present or added that contain fungal contaminants, which may contain hydrophobin polypeptides, this does not constitute adding hydrophobin within the context of the present invention. Typically, the hydrophobin is added to the composition in a form such that it is capable of self-assembly at an airliquid surface.

Typically, the hydrophobin is added in an isolated form, typically at least partially purified, such as at least 10% pure, based on weight of solids. By "added in isolated form", we mean that the hydrophobin is not added as part of a naturally-occurring organism, such as a mushroom, which naturally expresses hydrophobins. Instead, the hydrophobin will typically either have been extracted from a naturally-occurring source or obtained by recombinant expression in a host organism.

In one embodiment, the hydrophobin is added to the composition in monomeric, dimeric and/or oligomeric (i.e. consisting of 10 monomeric units or fewer) form. Preferably at least 50 wt% of the added hydrophobin is in at least one of these forms, more preferably at least 75, 80, 85 or 90 wt%. Once added, the hydrophobin will typically undergo assembly at the air/liquid interface and therefore the amount of monomer, dimer and oligomer would be expected to decrease.

Frozen aerated food products may optionally contain other ingredients such as one or more of the following: other proteins such as dairy proteins, either as pure ingredients or as liquid ingredients, e.g. milk or cream; oil or fat, notably in the form of an emulsified phase; sugars; salts; colours and flavours; chemical emulsifiers, such as monoglycerides; fruit or vegetable purees / extracts / juice; stabilisers or thickeners, such as polysaccharides; preservatives; inclusions, such as nuts, fruit, toffees.

The present invention will now be described further with reference to the following examples which are illustrative only and non-limiting.

Examples

Experiments were carried out to compare the retention of gas in aerated compositions during quiescent freezing.

**Example 1**

*Mix preparation*

A mix suitable for producing a frozen aerated composition was prepared containing hydrophobin HFBII (Example 1). A comparative example, in which skimmed milk powder was used instead of hydrophobin, was also prepared. The comparative example is representative of a mix which is expected to show good foam stability, due to the high level of milk protein. The mix compositions are given in Table 1. The sources of the ingredients are given in Table 2.

Table 1: Composition of mixes

| Ingredient | Concentration (wt%) | |
|---|---|---|
| | Example 1 | Comparative Example |
| Sucrose | 10 | 10 |
| Xanthan gum | 0.5 | 0.5 |
| Skimmed milk powder | 0 | 11 |
| HFBII | 0.1 | 0 |
| Water | 89.4 | 78.5 |

Table 2: Sources of ingredients

| Ingredient | Details | Supplier |
|---|---|---|
| Sucrose | | Tate & Lyle, UK |
| Skimmed milk powder | 33-36% protein, 0.8% fat, 3.7% moisture | United Milk, UK. |
| Xanthan Gum (Keltrol RD) | Cold dispersible | CP Kelco |
| HFBII | Purified from *T. reesei* | VTT Biotechnology, Finland. |

The hydrophobin HFBII had been purified from *Trichoderma reesei* essentially as described in WO00/58342 and Linder et al., 2001, Biomacromolecules 2: 511-517. The xanthan was included in order to prevent creaming of the foam during storage.

The mixes were prepared in 100g batches. Sucrose, xanthan gum and skimmed milk powder (where used) were dry blended and added slowly into stirred water at room temperature. The mixes were heated to 55°C and stirred for around 30 minutes to ensure that xanthan and milk proteins (where used) were fully hydrated. The mixes were then cooled to room temperature. HFBII (where used) was added to the mix as an aliquot of a 5mg/ml solution to give the required final concentration. The solutions were then stirred gently for a further period.

*Aeration step*

100ml of each mix was gently sonicated in a sonic bath for 30 seconds to fully disperse the HFB II (where used) and placed in a stirred pot apparatus which was cooled to 5°C.

The apparatus consisted of a cylindrical, vertically mounted, jacketed stainless steel vessel with internal proportions of height 105mm and diameter 72mm, which contained an agitator. The agitator consisted of a rectangular impeller (72mm x 41.5mm) which scrapes the inner surface of the vessel as it rotates and two semi-circular blades (60mm diameter) positioned at a 45° angle to the impeller. The mix was aerated by rotating the agitator at 1200 rpm until an overrun of 100% was achieved (60 seconds for example 1 and 120 seconds for the comparative example).

The overrun of the aerated mixes was measured immediately after preparation using the technique outlined below. The aerated mixes were then stored in beakers in a refrigerator at 5°C for seven days and the overruns were re-measured.

*Quiescent freezing step*

After storage for 7 days, samples of each aerated mix were filled into rectangular rubber moulds and placed in a freezer at -25°C for 24 hours. The samples were then placed in a -80°C freezer cabinet for 30 minutes to increase their hardness prior to measurement of their overruns. Three samples were measured for each mix. The fourth sample was stored at -80°C prior to being examined by scanning electron microscopy (SEM) to study the microstructure.

*Measurement of overrun*

Aerated samples: The overrun was determined as follows for aerated unfrozen samples. First a plastic container of known volume (30.7ml) was carefully filled with unaerated mixture and weighed on a laboratory balance ($M_{unaerated}$). Then the procedure was repeated with a sample of the same volume of the aerated mixture ($M_{aerated}$). The overrun was determined from the equation:

$$Overrun = \frac{M_{unaerated} - M_{aerated}}{M_{aerated}} \times 100\%$$

(This is equivalent to the above definition of overrun when samples of fixed volume are used instead of samples of fixed mass.)

Frozen aerated samples: The overrun was determined as follows for frozen aerated samples. Aerated mix was weighed into the moulds in order to provide samples of known mass (approx 5g). The samples were then frozen as described above. After freezing, samples were removed from the moulds and each was immediately placed into a precooled plastic container. A screw lid containing two small holes was placed on the container. The volume of the enclosed space within the container had been previously determined to be 61.95ml. The container was carefully filled with 60 wt% sucrose solution at -10°C via one of the small holes using a graduated syringe. The second hole in the lid allowed the displaced air to escape. The volume of injected sucrose solution required to completely fill the container was determined from the syringe graduations. The volume of the sample of frozen foam ($V_{aerated}$) was given by the difference between the known volume of the container and the measured volume of injected solution. The test was completed within one minute in order to avoid melting of the frozen foam. The procedure was repeated with samples of frozen unaerated mix having the same mass ($V_{unaerated}$). The overrun was determined from the equation (i.e. for samples of fixed mass):

$$Overrun = \frac{V_{aerated} - V_{unaerated}}{V_{unaerated}} \times 100\%$$

*Scanning Electron Microscopy*

The microstructure of each sample was visualised using low temperature Scanning Electron Microscopy (SEM). To prepare specimens for microscopy, the sample was cooled to -80 °C on dry ice and a section was cut. This section, approximately 5mm x 5mm x 10mm in size, was mounted on a sample holder using a Tissue Tek: OCT™ compound (PVA 11%, Carbowax 5% and 85% non-reactive components). The sample including the holder was plunged into liquid nitrogen slush and transferred to a low temperature preparation chamber (Oxford Instrument CT1500HF) held under vacuum, approximately $10^{-4}$ bar. The sample was warmed up to -90 °C for approximately 60 to 90 seconds so that ice slowly sublimed to reveal surface details. It was then cooled to - 110°C to end the sublimation. The sample was next coated with gold using argon plasma. This process also took place under vacuum with an applied pressure of $10^{-1}$ millibars and current of 6 milliamps for 45 seconds. The sample was then transferred to a conventional Scanning Electron Microscope (JSM 5600), fitted with an Oxford Instruments cold stage at a temperature of -160°C. The sample was imaged and areas of interest were captured via digital image acquisition software.

*Results*

The overruns after aeration, after storage and after freezing are shown in Table 3. In the comparative example containing a high level of skimmed milk powder there is a significant reduction in the overrun both during storage and as a result of freezing. However, example 1 containing hydrophobin showed no loss of overrun during storage and a much smaller reduction during freezing. (In fact, at least part of this decrease can be accounted for by the change in volume of the gas due to the reduction in the temperature and does not arise from loss of gas from the sample). The results show that using hydrophobin in place of milk proteins greatly improves the retention of air both during storage and freezing of a foamed solution.

Table 3: Overruns (%)

|  | Example 1 | Comparative Example |
|---|---|---|
| Immediately after aeration | 119 | 130 |
| After storage for 7 days at 5°C | 119 | 109 |
| After freezing for 24 hours at -25°C | 102 | 67.2 |

SEM images of the frozen samples showed that example 1 had a uniform distribution of air bubbles. The comparative example without hydrophobin, appeared to have more unevenly distributed gas bubbles, and in agreement with the overrun measurements, it appeared that less air was present. Furthermore the ice crystals in the comparative example appeared more elongated and somewhat larger than those in example 1.

**Examples 2 and 3**

Two further mixes were prepared according to the same formulation and using the same procedure as in example 1. The mixes were then aerated using an electric Breville hand blender with the "beater blade" for about 1 minute. The overrun of the aerated mixes was measured. The aerated mixes were then stored at 5°C for 4 days and the overrun was measured again. Then the aerated mixes were frozen quiescently to produce the final frozen aerated product by two different methods, as follows:

*Example 2*: the aerated mix was placed in a mould and then frozen in a brine bath set at - 25°C for 15 minutes. Sticks were inserted into the product after about 30 seconds to 1 minute freezing time. The frozen aerated products were released from the moulds by briefly immersing the moulds in a warm water bath. The products were then placed in waxed paper wrappers.

*Example 3*: The aerated mix was placed in a container and then frozen in a domestic freezer set at -18°C for approximately 6 hours.

In each case, the frozen aerated products were then further cooled for 2 hours in a blast freezer at -35°C, after which their overrun was measured.

The overruns after storage and after freezing are shown in Table 4. Only small amounts of overrun were lost during quiescent freezing, ie. 5 and 7% ($\pm$ 1%) for examples 2 and 3 respectively. The data again show that hydrophobin is effective at stabilising the foam during freezing.

Table 4: Overruns (%)

|  | Example 2 | Example 3 |
|---|---|---|
| After storage for 7 days at 5°C | 104 | 107 |
| After freezing for 24 hours at -25°C | 99 | 100 |

**Claims**

1. A process for producing a frozen aerated composition and stabilising the aerated composition during freezing, the process comprising aerating an aqueous mixture, followed by quiescently freezing the aerated mixture, **characterized in that** the mixture comprises hydrophobin, wherein the hydrophobin is capable of self-assembly at a hydrophobic-hydrophilic interface to form a protein film and the hydrophobin comprises the sequence:

$$X_n\text{-C-}X_{5\text{-}9}\text{-C-C-}X_{11\text{-}39}\text{-C-}X_{8\text{-}23}\text{-C-}X_{5\text{-}9}\text{-C-C-}X_{6\text{-}18}\text{-C-}X_m \qquad \text{(SEQ. ID NO. 1)}$$

wherein X represents any amino acid and n and m independently represent an integer.

2. A process according to claim 1 wherein the mixture comprises at least 0.001 wt% hydrophobin.

3. A process according to claim 1 or claim 2 wherein the hydrophobin is in isolated form.

4. A process according to any one of claims 1 to 3 wherein the hydrophobin is a class II hydrophobin.

5. A process according to any one of the preceding claims wherein the frozen aerated composition has an overrun of at least 25%.

6. A process according to any one of the preceding claims wherein the composition is a food product.

7. A process according to claim 6 wherein the food product is a frozen confectionery product.

8. A process according to claim 7 wherein the frozen confectionery product is an ice cream.

9. A process according to any one of the preceding claims wherein the aerating step is selected from the group consisting of continuous whipping, batch whipping, gas injection, gas entrainment, gas generation via a chemical or biochemical reaction and release of trapped gas from a solution or solid.

10. A process according to any one of the preceding claims wherein the freezing step is selected from the group consisting of placing a container containing the aqueous mixture into a cold environment; immersing a mould containing the mixture in a bath of cold refrigerant; placing portions of the mixture directly into a bath or cryogenic fluid; film freezing; and spraying droplets of the mixture into a cold environment.

11. A process according to any one of the preceding claims wherein the mixture further comprises a yield stress agent.

12. A process according to claim 11 wherein the yield stress agent is xanthan and/or gellan.

13. Use of a hydrophobin for stabilising an aerated composition during quiescent freezing wherein the hydrophobin is capable of self-assembly at a hydrophobic-hydrophilic interface to form a protein film and the hydrophobin comprises the sequence:

$$X_n\text{-}C\text{-}X_{5\text{-}9}\text{-}C\text{-}C\text{-}X_{11\text{-}39}\text{-}C\text{-}X_{8\text{-}23}\text{-}C\text{-}X_{5\text{-}9}\text{-}C\text{-}C\text{-}X_{6\text{-}18}\text{-}C\text{-}X_m \qquad \text{(SEQ. ID NO. 1)}$$

wherein X represents any amino acid and n and m independently represent an integer.

**Patentansprüche**

1. Verfahren zur Herstellung einer gefrorenen durchlüfteten bzw. mit Gas behandelten Zusammensetzung und zur Stabilisierung der durchlüfteten bzw. mit Gas behandelten Zusammensetzung während des Gefrierens, wobei das Verfahren das Durchlüften bzw. Behandeln mit Gas eines wässrigen Gemischs, gefolgt von Gefrieren im ruhenden Zustand des durchlüfteten bzw. mit Gas behandelten Gemischs umfasst, **dadurch gekennzeichnet, dass** das Gemisch Hydrophobin umfasst, wobei sich das Hydrophobin an einer hydrophoben-hydrophilen Grenzfläche selbst organisieren kann, um eine Proteinschicht zu bilden, und das Hydrophobin die folgende Sequenz aufweist:

$$X_n\text{-}C\text{-}X_{5\text{-}9}\text{-}C\text{-}C\text{-}X_{11\text{-}39}\text{-}C\text{-}X_{8\text{-}23}\text{-}C\text{-}X_{5\text{-}9}\text{-}C\text{-}C\text{-}X_{6\text{-}18}\text{-}C\text{-}X_m \qquad \text{(Sequenzidentifizierungsnr. 1),}$$

wobei X für irgendeine Aminosäure steht und n und m unabhängig voneinander für eine ganze Zahl stehen.

2. Verfahren gemäß Anspruch 1, wobei das Gemisch wenigstens 0,001 Gew.-% Hydrophobin umfasst.

3. Verfahren gemäß Anspruch 1 oder Anspruch 2, wobei das Hydrophobin in isolierter Form ist.

4. Verfahren gemäß einem der Ansprüche 1 bis 3, wobei das Hydrophobin ein Klasse II-Hydrophobin ist.

5. Verfahren gemäß einem der vorangehenden Ansprüche, wobei die gefrorene durchlüftete bzw. mit Gas behandelte Zusammensetzung einen Aufschlag von wenigstens 25 % hat.

6. Verfahren gemäß einem der vorangehenden Ansprüche, wobei die Zusammensetzung ein Nahrungsmittelprodukt ist.

7. Verfahren gemäß Anspruch 6, wobei das Nahrungsmittelprodukt ein gefrorenes Konfektprodukt ist.

8. Verfahren gemäß Anspruch 7, wobei das gefrorene Konfektprodukt ein Speiseeis ist.

9. Verfahren gemäß einem der vorangehenden Ansprüche, wobei der Durchlüftungsschritt bzw. der Schritt der Behandlung mit Gas ausgewählt ist aus der Gruppe, bestehend aus kontinuierlichem Schlagen, diskontinuierlichem Schlagen, Gasinjektion, Mitreißen von Gas, Gaserzeugung durch eine chemische oder biochemische Reaktion und Freisetzung von eingeschlossenem Gas aus einer Lösung oder einem Feststoff.

10. Verfahren gemäß einem der vorangehenden Ansprüche, wobei der Gefrierschritt ausgewählt ist aus der Gruppe, bestehend aus Stellen eines Behälters, der das wässrige Gemisch enthält, in eine kalte Umgebung; Eintauchen einer Form, die das Gemisch enthält, in ein Bad mit kaltem Kältemittel; Platzieren von Portionen des Gemisches direkt in ein Bad oder kyrogenes Fluid; Filmgefrieren und Sprühen von Tröpfchen des Gemisches in eine kalte Umgebung.

11. Verfahren gemäß einem der vorangehenden Ansprüche, wobei das Gemisch außerdem ein Fließspannungsmittel umfasst.

12. Verfahren gemäß Anspruch 11, wobei das Fließspannungsmittel Xanthan und/oder Gellan ist.

13. Verwendung eines Hydrophobins zur Stabilisierung einer durchlüfteten bzw. mit Gas behandelten Zusammensetzung während des Gefrierens im Ruhezustand, wobei sich das Hydrophobin an einer hydrophoben-hydrophilen Grenzfläche selbst organisieren kann, um eine Proteinschicht zu bilden, und das Hydrophobin die folgende Sequenz aufweist:

$$X_n\text{-}C\text{-}X_{5\text{-}9}\text{-}C\text{-}C\text{-}X_{11\text{-}39}\text{-}C\text{-}X_{8\text{-}23}\text{-}C\text{-}X_{5\text{-}9}\text{-}C\text{-}C\text{-}X6_{\text{-}18}\text{-}C\text{-}X_m \qquad \text{(Sequenzidentifizierungsnr. 1)}$$

wobei X für irgendeine Aminosäure steht und n und m unabhängig voneinander für eine ganze Zahl stehen.

## Revendications

1. Procédé de production d'une composition aérée congelée et de stabilisation de la composition aérée pendant la congélation, le procédé comprenant l'aération d'un mélange aqueux, suivi par la congélation de manière passive du mélange aéré, **caractérisé en ce que** le mélange comprend de l'hydrophobine, dans lequel l'hydrophobine est capable d'auto-assemblage à une interface hydrophobe-hydrophile pour former un film de protéine et l'hydrophobine comprend la séquence :

$$X_n\text{-}C\text{-}X_{5\text{-}9}\text{-}C\text{-}C\text{-}X_{11\text{-}39}\text{-}C\text{-}X_{8\text{-}23}\text{-}C\text{-}X_{5\text{-}9}\text{-}C\text{-}C\text{-}X_{6\text{-}18}\text{-}C\text{-}X_m \qquad \text{(SEQ ID NO 1)}$$

dans laquelle X représente un acide aminé quelconque et n et m représentent indépendamment un nombre entier.

2. Procédé selon la revendication 1, dans lequel le mélange comprend au moins 0,001 % en poids d'hydrophobine.

3. Procédé selon la revendication 1 ou la revendication 2, dans lequel l'hydrophobine est sous une forme isolée.

4. Procédé selon l'une quelconque des revendications 1 à 3, dans lequel l'hydrophobine est une hydrophobine de classe II.

5. Procédé selon l'une quelconque des revendications précédentes, dans lequel la composition aérée congelée a un foisonnement d'au moins 25 %.

6. Procédé selon l'une quelconque des revendications précédentes, dans lequel la composition est un produit alimentaire.

7. Procédé selon la revendication 6, dans lequel le produit alimentaire est une sucrerie congelée.

8. Procédé selon la revendication 7, dans lequel la sucrerie congelée est une glace à la crème.

9. Procédé selon l'une quelconque des revendications précédentes, dans lequel l'étape d'aération est choisie dans le groupe constitué par le fouettage continu, le fouettage discontinu, l'injection de gaz, l'entraînement de gaz, la formation de gaz par une réaction chimique ou biochimique et la libération d'un gaz piégé dans une solution ou un solide.

10. Procédé selon l'une quelconque des revendications précédentes, dans lequel l'étape de congélation est choisie dans le groupe constitué par le placement d'un récipient contenant le mélange aqueux dans un environnement froid, l'immersion d'un moule contenant le mélange dans un bain de réfrigérant froid, le placement de portions du mélange directement dans un bain de liquide cryogénique, la congélation d'un film, et la pulvérisation de gouttelettes du mélange dans un environnement froid.

11. Procédé selon l'une quelconque des revendications précédentes, dans lequel le mélange comprend en outre un agent de contrainte d'écoulement.

12. Procédé selon la revendication 11, dans lequel l'agent de contrainte d'écoulement est le xanthane et/ou le gellane.

13. Utilisation d'une hydrophobine pour la stabilisation d'une composition aérée pendant la congélation passive, dans laquelle l'hydrophobine est capable d'auto-assemblage à une interface hydrophobe-hydrophile pour former un film de protéine et l'hydrophobine comprend la séquence :

$$X_n\text{-}C\text{-}X_{5\text{-}9}\text{-}C\text{-}C\text{-}X_{11\text{-}39}\text{-}C\text{-}X_{8\text{-}23}\text{-}C\text{-}X_{5\text{-}9}\text{-}C\text{-}C\text{-}X_{6\text{-}18}\text{-}C\text{-}X_m \qquad \text{(SEQ ID NO 1)}$$

dans laquelle X représente un acide aminé quelconque et n et m représentent indépendamment un nombre entier.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6187365 B
- WO 0174864 A
- WO 964188 A
- WO 0157076 A
- EP 1206193 A
- WO 0058342 A

### Non-patent literature cited in the description

- Ice Cream. Van Nostrand Reinhold Company, 1986
- **SAMBROOK et al.** Molecular Cloning: A Laboratory Manual. Cold Spring Harbor Laboratory Press, 2001
- **AUSUBEL et al.** Short Protocols in Molecular Biology. John Wiley & Sons, Inc, 1999
- Food polysaccharides and their applications. Marcel Dekker Inc, 2005
- Food Gels. Elsevier, 1990
- **WESSELS.** *Adv. Microb. Physio.,* 1997, vol. 38, 1-45
- **WOSTEN.** *Annu Rev. Microbiol.,* 2001, vol. 55, 625-646
- **DE VOCHT et al.** *Biophys. J.,* 1998, vol. 74, 2059-68
- **WOSTEN et al.** *Embo. J.,* 1994, vol. 13, 5848-54
- **MACCABE ; VAN ALFEN.** *App. Environ. Microbiol,* 1999, vol. 65, 5431-5435
- **COLLEN et al.** *Biochim Biophys Acta,* 2002, vol. 1569, 139-50
- **CALONJE et al.** *Can. J. Microbiol.,* 2002, vol. 48, 1030-4
- **ASKOLIN et al.** *Appl Microbiol Biotechnol.,* 2001, vol. 57, 124-30
- **DE VRIES et al.** *Eur J Biochem.,* 1999, vol. 262, 377-85
- **HEERTJE et al.** *Food Science and Technology,* 1998, vol. 31, 387-396
- **LINDER et al.** *Biomacromolecules,* 2001, vol. 2, 511-517